# EUROPÄISCHE PATENTSCHRIFT

(11) **EP 1 084 314 B1**
(45) Veröffentlichungstag und Bekanntmachung des Hinweises auf die Patenterteilung: **19.05.2004**
(21) Anmeldenummer: 00901516.5
(22) Anmeldetag: 08.01.2000
(51) Int. Cl.: E04D 12/00, D06N 5/00, B32B 5/26, D04H 13/00

(54) **HYDROPHOB AUSGERÜSTETE DIFFUSIONSOFFENE UNTERSPANNBAHN**
HYDROPHOBICALLY FINISHED ROOF LINING WHICH ALLOWS DIFFUSION
BANDE DE GARNITURE INFERIEURE A POROSITE OUVERTE DE DIFFUSION ET POURVUE D'UN SYSTEME HYDROPHOBE

(30) Priorität: 04.02.1999 DE 19904423
(43) Veröffentlichungstag der Anmeldung: 21.03.2001
(73) Patentinhaber: Lafarge Roofing Components GmbH & Co. KG, 61437 Oberursel (DE)
(72) Erfinder: KLÖBER, Johannes, D-58256 Ennepetal (DE); KLEIN, Hans-Georg, D-42477 Radevormwald (DE)
(74) Vertreter: Grundmann, Dirk, Dr.
(86) Internationale Anmeldenummer: PCT/EP2000/000096
(87) Internationale Veröffentlichungsnummer: WO 2000/046464

(56) Entgegenhaltungen:
- EP-A- 0 683 260
- EP-A- 0 742 305
- WO-A-97/30244
- DE-A- 19 729 533
- DE-U- 29 617 779
- PATENT ABSTRACTS OF JAPAN vol. 1997, no. 08, 29. August 1997 (1997-08-29) & JP 09 111969 A (KEIWA SHOKO KK), 28. April 1997 (1997-04-28)

## Beschreibung

Die Erfindung betrifft eine hydrophob ausgerüstete diffusionsoffene Unterspannbahn gemäß Gattungsbegriff des Anspruchs 1.

Eine derartige Dachunterspannbahn besitzt eine mittels thermoplastischem Schmelzkleber ein- oder beidseitig mit je einem Deckvlies bzw. Grundvlies verbundene wasserundurchlässige aber wasserdampfdurchlässige Membran.

Aus der W097/30244 ist eine diffusionsoffene Dachunterspannbahn vorbekannt, bei der eine innere Vliesschicht porös ausgebildet ist und beidseitig jeweils mit einem groben Deckvlies verklebt ist. Die Verklebung erfolgt dort durch einen Hot-Melt-Kleber im Wege des Kaschierens unter Druck und Wärme. Dort ist die innere Vliesschicht hydrophob ausgerüstet. Bei den beiden äußeren Deckvliesen soll auf die kostenintensive hydrophobe Ausrüstung verzichtet werden.

Aus der EP 0 716 176 ist eine diffusionsoffene Dachunterspannbahn bekannt, die aus drei Lagen besteht, die miteinander verbunden sind. Die mittlere meltblown-Schicht dient als Wassersperre und ist wasserdampfdurchlässig. Die Faseroberfläche kann dort z.B. mit Fluorchemikalien zur Erhöhung der Hydrophobie behandelt werden.

Aus dem US-Patent 3,837,996 ist es bekannt, Vliese im Tauchverfahren hydrophob auszurüsten.

Bei den im Stand der Technik bekannten diffusionsoffenen Unterspannbahnen ist unter Laborbedingungen die Wasserdampfdurchlässigkeit und die Wasserdichtigkeit in genügendem Maße gegeben. Es hat sich jedoch gezeigt, daß sich unter Praxisbedingungen diese Eigenschaften verschlechtern. Insbesondere wurde eine erhebliche Reduzierung der Wasserdichtigkeit festgestellt, wenn die diffusionsoffene Dachunterspannbahn in Kontakt getreten ist mit Holzschutzmitteln oder dergleichen. An mit Holzschutzmitteln in Berührung getretenen Flächen der Dachunterspannbahn wurde eine Durchnässung beobachtet. Die Wirkung der hydrophoben Ausrüstung des Vlieses geht an derartigen Stellen verloren. Da die gattungsgemäßen Dachunterspannbahnen aber regelmäßig auf Holzsparren oder -schalungen aufgebracht werden, ist eine Berührung mit Holzschutzmitteln oder dergleichen nicht vermeidbar.

Der Erfindung liegt daher die Aufgabe zugrunde, bei einer gattungsgemäßen diffusionsoffenen Unterspannbahn die hydrophobe Ausrüstung beständiger auszugestalten.

Gelöst wird die Aufgabe durch die in den Ansprüchen angegebene Erfindung, wobei bei der im Anspruch 1 angegebenen Lösung darauf abgestellt ist, daß eine Inhaltskomponente des Schmelzklebers ein Hydrophobierungsmittel ist.

Zufolge der erfindungsgemäßen Ausgestaltung erfolgt die beständige hydrophobe Ausrüstung nicht mehr notwendigerweise bei der Fertigung des Deckvlieses oder vor der Verklebung, sondern unmittelbar zusammen mit der Verklebung. Der Schmelzkleber besteht aus einer eine Klebewirkung entfaltenen Substanz und einem Hydrophobierungsmittel, welches dieser klebenden Substanz in geringer Menge beigefügt ist. Bei dem Schmelzkleber kann es sich um ein Äthyl-Vinyl-Acetat, ein Polyäthylen oder ein Polyurethan handeln. Das Hydrophobierungsmittel ist vorzugsweise ein fluoriertes Polyurethan. Derartige wachsartigen Substanzen sind aus der Textiltechnik her bekannt (vgl. DE 2961779 U), bspw. unter der Bezeichnung FX-1801 der Firma 3M. Das Hydrophobierungsmittel hat vorzugsweise die gleiche Schmelztemperatur wie die schmelzklebende Inhaltskomponente, so daß beide Komponenten bei Überschreiten der Schmelztemperatur einen fließfähigen Aggregatzustand einnehmen und sich in benetzender Weise auf die Vliesfasern legen können. Es ist insbesondere vorgesehen, daß die hydrophobierende Inhaltskomponente mit einem Massenanteil von 0,5 bis 5% dem Schmelzkleber beigemischt ist, wobei eine bevorzugte Wirkstoffkonzentration bei 2-3 Massenprozent liegt. Die geschmolzene Schmelzklebermasse und insbesondere das geschmolzene Hydrophobierungsmittel sollen vorzugsweise eine das Deckvliesmaterial benetzende Eigenschaft besitzen, so daß sich auf die Vliesfasern des Deckvlieses eine Mantelschicht abscheiden kann von nur wenigen Nanometern Dicke. Der Schmelzkleber kann in Form eines Spinnvlieses auf die Deckvliesseite aufgeblasen werden. Vorzugsweise wird dabei eine Flächendeckung von etwa 5 bis 20 g/m² erreicht. Bei der Membran handelt es sich um eine mikroporöse Folie mit Porenweiten von bis zu 0,5 bis 0,8 Mikrometer. Der Porenanteil kann im Bereich von 50 bis 60% liegen. Die mit Schmelzkleber vorbeschichteten Deckvliese können mittels eines Bandkalanders oder einer Flachbettkaschiervorrichtung mit der Membran verklebt werden.

Ein Ausführungsbeispiel wird anhand beigefügter Zeichnungen nachfolgend erörtert. Es zeigen:
- Fig. 1: eine erfindungsgemäße diffusionsoffene Dachunterspannbahn im Querschnitt;
- Fig. 2: schematisch angedeutet den Verfahrensschritt der Verklebung der drei Schichten;
- Fig. 3: eine stark vergrößerte und idealisierte Darstellung der aufeinanderliegenden aber noch nicht miteinander verklebten Schichten und
- Fig. 4: eine Folgedarstellung der Fig. 3 nach dem druckbeaufschlagten Aufschmelzen des Schmelzklebers.

Bei der mittleren Membran 3 handelt es sich im Ausführungsbeispiel um ein Polyäthylen-Film mit mikroporöser Gestalt. Die Porengröße ist dort maximal 0,5 Mikrometer. Der Porenanteil an der Gesamtfläche der Membran liegt bei 50 %. Diese Membran 3 ist eindeutig mit einem Deckvlies 1 und andererseits mit einem Grundvlies 2 verklebt. Das Deckvlies 1 und das Grundvlies 2 besitzen eine vergleichsweise gröbere Struktur, als die Membran 3. Deckvlies 1 und Grundvlies 2 werden vorbehandelt, indem eine ihrer Seiten mit einer Schmelzkleberschicht 4, 5 versehen wird. Die Schmelzkleberschicht 4, 5 wird mittels Spinndüsen in Form eines sehr feinen Spinnvlieses aufgeblasen. Die Faserstruktur des Spinnvlieses 4, 5 ist erheblich feiner, als die Faserstruktur des Deckvlieses 1 oder des Grundvlieses 2. Während das Deckvlies eine Stärke von 80 g/m² besitzt und aus Polypropylen besteht, besitzt das Grundvlies 2 eine Stärke von 20 g/m² und besteht ebenfalls aus Polypropylen. Auf beide Vliese ist einseitig das die Klebefunktion ausbildende Mikrofaservlies mit einer Bedeckung von 7 g/m² aufgeblasen. Bei dem Mikrofaservlies handelt es sich um ein Äthyl-Vinyl-Acetat (EVA), dem ein fluorhaltiges Polyurethanderivat beigemischt worden ist, so daß die hydrophob wirksame Substanz einen Anteil von 0,3 bis 2% besitzt. Die hydrophobierende Inhaltskomponente wird dem Schmelzkleber bei seiner Fertigung zugemischt, so daß er als homogenes Granulat verarbeitet werden kann, indem er bspw. plastifizierend extrudiert den Spinndüsen zugeführt wird.

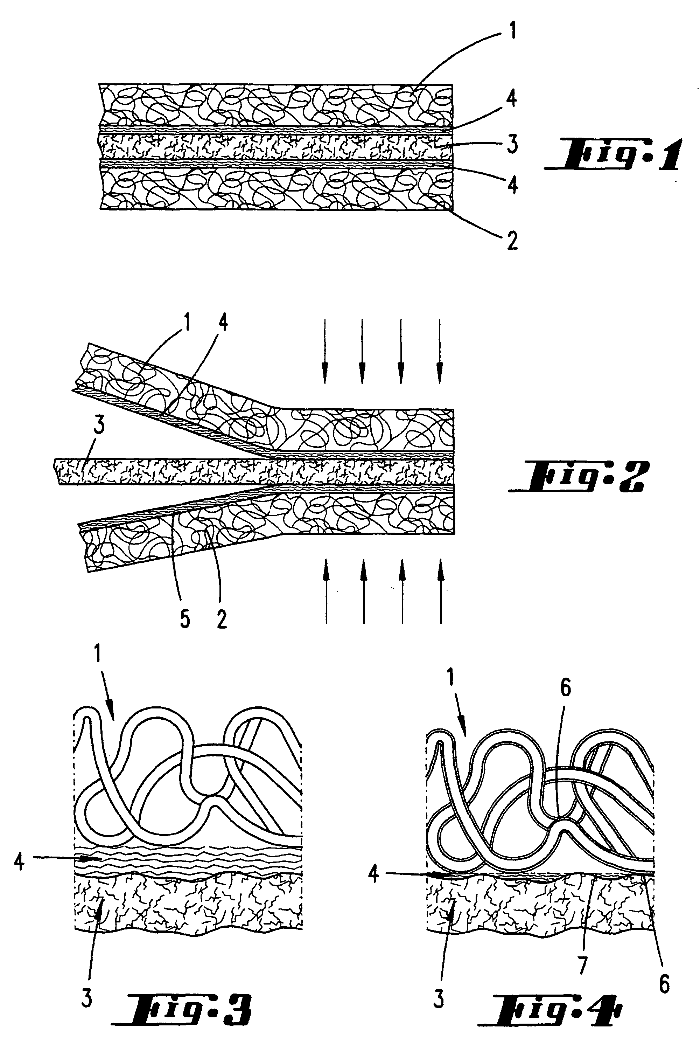

Nachdem das mit einem hydrophobierten Schmelzkleber 4 beschichtete Deckvlies 1 und das ebenfalls mit einer hydrophobierten Kleberschicht 5 beschichtete Grundvlies 2, wie in Fig. 2 dargestellt, in Kontakt mit der wasserdichten aber wasserdampfdurchlässigen Membran gebracht sind, wird, wie in Fig. 2 mit den Pfeilen angedeutet, Druck und Wärme auf die Vliesoberflächen ausgeübt, so daß die Schmelzkleberschichten 4, 5 aufschmelzen.

Zufolge seiner die Fasern von Deckvlies 1 und Grundvlies 2 benetzenden Wirkung werden die Fasern von Deckvlies 1 und Grundvlies 2 zumindest bereichs- oder teilweise mit einer hauchdünnen hydrophoben Schicht umgeben, so daß Deckvlies 1 bzw. Grundvlies 2 und die der Kleberschicht 4, 5 zugewandte Seite der Membran 3 hydrophob ausgerüstet ist. Auch auf der Oberfläche der Membran 3 bildet sich ein hydrophobierender Film aus, der gleichzeitig das Kontaktmittel darstellt, um Deckvlies 1 bzw. Grundvlies 2 mit der Membran 3 zu verbinden.

Die Ausübung des Drucks (Pfeile in Fig. 2) auf Deckvlies 1 und Grundvlies 2 hat zur Folge, daß sich die Dicke der gesamten Dachunterspannbahn reduziert. Die einzelnen Fasern von Deckvlies 1 und Grundvlies 2 verkleben zufolge der Kleberbeschichtung miteinander, so daß mit der Verbindung der drei Vliesschichten auch eine geringfügige Dickenkompression stattfindet, wobei das die Kompression aufrechterhaltende Mittel gleichzeitig das Hydrophobierungsmittel ist.

Durch die feine Faserstruktur bzw. Korngröße wird eine weitestgehende, Flächenbenetzung/Beschichtung der Folienoberfläche und der Faseroberflächen erreicht. Dies hat zur Folge, daß eine flächige Verteilung des Hydrophobierungsmittels und damit eine hohe Wirksamkeit erzielt ist. Ergänzend ist auch vorgesehen, daß dem Basismaterial von Deckvlies 1 und Grundvlies 2 ein Hydrophobierungsmittel als Inhaltskomponente beigemischt ist.

Es hat sich gezeigt, daß eine erfindungsgemäß ausgebildete Dachunterspannbahn eine erheblich vergrößerte Beständigkeit gegen Durchfeuchtung besitzt. Die Wasserdichtigkeit bleibt vorhanden, auch wenn die Unterspannbahn auf einer nassen, insbesondere mit Holzschutzmitteln imprägnierte Schalung verlegt wird. Der Anteil des Hydrophobierungsmittels kann bei 0,12 bis 0,24 g/m² liegen.

## Patentansprüche

1. Hydrophob ausgerüstete diffusionsoffene Dachunterspannbahn, mit einer mittels thermoplastischem Schmelzkleber einseitig oder bevorzugt beidseitig mit einem Deckvlies (1, 2) verbundenen wasserundurchlässigen aber wasserdampfdurchlässigen Membran (3), **dadurch gekennzeichnet, daß** eine Inhaltskomponente des Schmelzklebers ein Hydrophobierungsmittel ist.

2. Dachunterspannbahn nach Anspruch 1 oder insbesondere danach, **dadurch gekennzeichnet, daß** der Schmelzkleber ein Äthyl-Vinyl-Acetat, ein Polyäthylen oder ein Polyurethan ist, welchen ein fluoriertes Polyurethan beigemischt ist.

3. Dachunterspannbahn nach einem oder mehreren der vorhergehenden Ansprüche oder insbesondere danach, **dadurch gekennzeichnet, daß** das Hydrophobierungsmittel etwa die gleiche Schmelztemperatur besitzt, wie die schmelzklebende Inhaltskomponente.

4. Dachunterspannbahn nach einem oder mehreren der vorhergehenden Ansprüche oder insbesondere danach, **dadurch gekennzeichnet, daß** die hydrophobierende Inhaltskomponente einen Wirkanteil von 0,5 bis 5%, vorzugsweise 1% besitzt.

5. Dachunterspannbahn nach einem oder mehreren der vorhergehenden Ansprüche oder insbesondere danach,
**dadurch gekennzeichnet, daß** die geschmolzene Schmelzklebermasse eine das Deckvliesmaterial benetzende Eigenschaft besitzt.

6. Dachunterspannbahn nach einem oder mehreren der vorhergehenden Ansprüche oder insbesondere danach, **dadurch gekennzeichnet, daß** der Schmelzkleber auf der Deckvliesseite in Form eines schmelzgeblasenen Spinnvlieses aufgebracht wird mit einer Flächendeckung von etwa 5 bis 20 g/m².

7. Dachunterspannbahn nach einem oder mehreren der vorhergehenden Ansprüche oder insbesondere danach, **dadurch gekennzeichnet, daß** die Membran (3) eine mikroporöse Folie mit Porenweiten von bis zu 0,5 bis 0,8 Mikrometer und einem Porenflächenanteil von 50 bis 60% ist.

8. Dachunterspannbahn nach einem oder mehreren der vorhergehenden Ansprüche oder insbesondere danach, **dadurch gekennzeichnet, daß** die mit Schmelzkleber vorbeschichteten Deckvliese (1, 2) mittels Bandkalander oder Flachbettkaschiervorrichtung mit der Membran (3) verklebt werden.

9. Dachunterspannbahn nach einem oder mehreren der vorhergehenden Ansprüche oder insbesondere danach, **dadurch gekennzeichnet, daß** die Fasern von Deckvlies (1, 2) aus einem Material bestehen, welches als Inhaltskomponente ein Hydrophobierungsmittel besitzt.

## Claims

1. Hydrophobically finished roof lining which allows diffusion, with a membrane (3) that is impermeable to water but permeable to steam and is connected to a cover fleece (1, 2) on one side, or preferably on both sides, by means of thermoplastic hot-melt adhesive, **characterised in that** one component of the hot-melt adhesive is a hydrophobing agent.

2. Roof lining according to claim 1, or according to that claim in particular, **characterised in that** the hot-melt adhesive is an ethyl vinyl acetate, a polyethylene or a polyurethane to which is added a fluorinated polyurethane.

3. Roof lining according to one or more of the preceding claims, or according to these daims in particular, **characterised in** mat the hydrophobing agent has approximately the same melting temperature as the hot-melt adhesive component.

4. Roof lining according to one or more of the preceding claims, or according to these daims in particular, **characterised in that** the hydrophobing component has an active proportion of 0.5 to 5%, preferably 1%.

5. Roof lining according to one or more of the preceding claims, or according to these daims in particular, charactensed in that the molten hot-melt adhesive mass has the property of wetting the cover fleece material.

6. Roof lining according to one or more of the preceding daims, or according to these claims in particular, **characterised in that** the hot-melt adhesive is applied to the cover fleece side in the form of a melt blasted spunbonded material, with a coverage of approximately 5 to 20 g/m².

7. Roof lining according to one or more of the preceding claims, or according to these daims in parficular, **characterised in that** the membrane (3) is a microporous film with pore widths of up to 0.5 to 0.8 micrometers and a pore surface proportion of 50 to 60%

8. Roof lining according to one or more of the preceding claims, or according to these claims in particular, **characterised in** tnat the cover fleeces (1, 2) pre-coated with hot-melt adhesive are adhered to the membrane (3) by means of a strip calander or flat bed laminating device.

9. Roof fining according to one or more of the preceding claims, or according to these claims in particular, cnaracterised in that the fibres of the cover fleece (1, 2) consist of a material one of whose components is a hydrophobing agent.

## Revendications

1. Bande de garniture inférieure de toit à porosité ouverte de diffusion et pourvue d'un système hydrophobe, avec une membrane (3) imperméable à l'eau mais perméable à la vapeur d'eau, reliée par une colle à fusion thermoplastique par un côté ou de préférence par les deux côtés à une nappe de recouvrement (1, 2), **caractérisée en ce qu'**une composante contenue de la colle à fusion est un imperméabilisant.

2. Bande de garniture inférieure de toit selon la revendication 1 ou en particulier ensuite, **caractérisée en ce que** la colle à fusion est un éthyle-vinyle-acétate, un polyéthylène, ou un polyuréthane auxquels est ajouté un polyuréthane fluoré.

3. Bande de garniture inférieure de toit selon l'une ou plusieurs des revendications précédentes ou en particulier ensuite, **caractérisée en ce que** l'imperméabilisant possède à peu près la même température de fusion que la composante contenue collant par fusion.

4. Bande de garniture inférieure de toit selon l'une ou plusieurs des revendications précédentes ou en particulier ensuite, **caractérisée en ce que** la composante contenue imperméabilisante possède une part active de 0,5 à 5 %, de préférence de 1 %.

5. Bande de garniture inférieure de toit selon l'une ou plusieurs des revendications précédentes ou en particulier ensuite, **caractérisée en ce que** la masse de colle à fusion fondue possède une propriété mouillant le matériau de nappe de recouvrement.

6. Bande de garniture inférieure de toit selon l'une ou plusieurs des revendications précédentes ou en particulier ensuite, **caractérisée en ce que** la colle à fusion est appliquée sur le côté de la nappe de recouvrement sous la forme d'une nappe de filature soufflée à l'état fondu avec un recouvrement de surface d'environ 5 à 20 g/m².

7. Bande de garniture inférieure de toit selon l'une ou plusieurs des revendications précédentes ou en particulier ensuite, **caractérisée en ce que** la membrane (3) est une feuille microporeuse avec des largeurs de pore de jusqu'à 0,5 à 0,8 micromètres et une part de surface en pores de 50 à 60 %.

8. Bande de garniture inférieure de toit selon l'une ou plusieurs des revendications précédentes ou en particulier ensuite, **caractérisée en ce que** les nappes de recouvrement (1, 2) recouvertes préalablement dé colle à fusion sont collées par des calandres ou un dispositif de contrecollage à lit plat à la membrane (3).

9. Bande de garniture inférieure de toit selon l'une ou plusieurs des revendications précédentes ou en particulier ensuite, **caractérisée en ce que** les fibres de la nappe de recouvrement (1, 2) sont constituées d'un matériau qui, comme composante contenue, possède un imperméabilisant.
